(19) **Europäisches Patentamt European Patent Office Office européen des brevets**

(11) **EP 3 688 315 B1**

(12) **EUROPEAN PATENT SPECIFICATION**

(45) Date of publication and mention of the grant of the patent:
**03.07.2024 Bulletin 2024/27**

(21) Application number: **18786478.0**

(22) Date of filing: **20.09.2018**

(51) International Patent Classification (IPC):
**F15B 11/042** (2006.01)    **F15B 11/044** (2006.01)
**F15B 15/28** (2006.01)

(52) Cooperative Patent Classification (CPC):
**F15B 15/2815; F15B 11/042; F15B 11/044;**
F15B 2211/6303; F15B 2211/6313;
F15B 2211/7053; F15B 2211/7656

(86) International application number:
**PCT/US2018/051837**

(87) International publication number:
**WO 2019/067291 (04.04.2019 Gazette 2019/14)**

(54) **METHOD AND APPARATUS FOR CONTROLLING A DOUBLE-ACTING PNEUMATIC ACTUATOR**

VERFAHREN UND VORRICHTUNG ZUR STEUERUNG EINES DOPPELTWIRKENDEN PNEUMATISCHEN STELLGLIEDES

PROCÉDÉ ET APPAREIL DE COMMANDE D'UN ACTIONNEUR PNEUMATIQUE À DOUBLE EFFET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2017 US 201762565929 P**

(43) Date of publication of application:
**05.08.2020 Bulletin 2020/32**

(73) Proprietor: **Fisher Controls International LLC
Marshalltown, IA 50158 (US)**

(72) Inventors:
• **METSCHKE, Christopher S.**
  **Marshalltown, IA 50158 (US)**
• **FONTAINE, Michael R.**
  **Marshalltown, IA 50158 (US)**
• **JUNK, Kenneth W.**
  **Marshalltown, IA 50158 (US)**
• **SMID, David L.**
  **Marshalltown, IA 50158 (US)**

(74) Representative: **Foot, Paul Matthew James
Withers & Rogers LLP
2 London Bridge
London SE1 9RA (GB)**

(56) References cited:
**US-A1- 2006 037 466    US-A1- 2009 199 703**

• **XIANGRONG SHEN ET AL: "Simultaneous Force and Stiffness Control of a Pneumatic Actuator", JOURNAL OF DYNAMIC SYSTEMS, MEASUREMENT AND CONTROL, vol. 129, no. 4, 1 January 2007 (2007-01-01), pages 425-434, XP055539866, US ISSN: 0022-0434, DOI: 10.1115/1.2745850**

## Description

### FIELD OF THE TECHNOLOGY

The present invention generally relates to control valves and, more particularly, to methods and apparatus for controlling a double-acting pneumatic actuator for a process control valve.

### BACKGROUND INFORMATION

Many industrial processes use control valves to control the flow rates of fluids through pipes. These control valves are opened and closed by actuators, the positions of which are set by positioners using feedback from actuator position sensors and process settings. The goal of the positioner and actuator combination is to quickly and accurately control actuator position and to minimize deviations in the actuator position in response to the forces generated by the process fluids flowing through the valve.

A double-acting pneumatic actuator changes position by adjusting pressures in two pneumatic chambers, where the pressures push on a piston connected to a stem. The stem, in turn, translates the motion of the piston to adjust an opening of a control valve to change the flow of a process fluid. When the forces from the flow of process fluid move the actuator, the process may be adversely affected, and additional wear on actuator components may reduce the life of the actuator. Stiffness of the actuator presents an engineering trade-off between being able to rapidly control the actuator position and limiting the effect of the buffeting forces in the valve on fluctuations in the position of the actuator. Reducing undesired variations in stiffness of valve actuators would improve the quality and the durability of the process control system.

An example of a known method of simultaneous force and stiffness control for a pneumatic actuator is described in Xiangrong Shen et. Al: "Simultaneous Force and Stiffness Control of a Pneumatic Actuator", Journal of Dynamic Systems, Measurement and Control, Volume 129, Issue Number 4, 1 January 2007, Pages 425 to 434.

### SUMMARY

Implementations of methods and corresponding systems of this disclosure can control the position of a double-acting pneumatic actuator in view of constraints set on the stiffness of the actuator. The system can increase the stiffness by increasing the opposing pressures in the two pneumatic chambers and decrease the stiffness, conversely, by decreasing the two pressures. Thus, by controlling the two pneumatic signals to the actuator chambers, the disclosed methods can change the position of the actuator while simultaneously increasing or decreasing the stiffness.

According to a first aspect of the claimed invention, there is provided a method of controlling a double-acting pneumatic actuator as defined in claim 1.

In some embodiments, the method may comprise measuring the pressures in each of the pneumatic chambers of the actuator and using the measured pressures in computing the numerical indicator of the stiffness of the actuator. In some embodiments, the method may comprise computing the numerical indicator of the stiffness of the actuator using a weighted sum of the pressures in the two pneumatic chambers. In some embodiments, the method may comprise computing the numerical indicator of the stiffness of the actuator by averaging the pressures in the two pneumatic chambers.

In some embodiments, activating the pneumatic devices to adjust the pressures in the pneumatic chambers of the actuator in response to the two control signals may comprise activating each of the pneumatic devices to provide a constant flow rate for a duration consistent with the magnitude of the corresponding control signal.

According to a second aspect of the claimed invention, there is provided a system for controlling a double-acting pneumatic actuator as defined in claim 6.

In some embodiments, the electronic processing unit may be further configured to compute the two electrical control signals to adjust the pressures in the two pneumatic chambers so as to simultaneously minimize the error in the position of the actuator and an error in the numerical indicator of the stiffness of the actuator.

In some embodiments, the interface for obtaining the constraint on the numerical indicator of the stiffness of the actuator may comprise a means of selecting stored values for the constraint on the numerical indicator of the stiffness of the actuator.

### BRIEF DESCRIPTION OF THE DRAWINGS

Fig. 1 is a block diagram of an example positioning system configured to control a double-acting pneumatic actuator;

Fig. 2 is a flow diagram description of an example method for controlling an actuator in view of a constraint on the stiffness of the actuator;

Fig. 3 is a flow diagram of an example method for controlling an actuator by incorporating measured chamber pressures into a control loop; and

Fig. 4 is a diagram of the state-space description of an actuator control loop.

### DETAILED DESCRIPTION

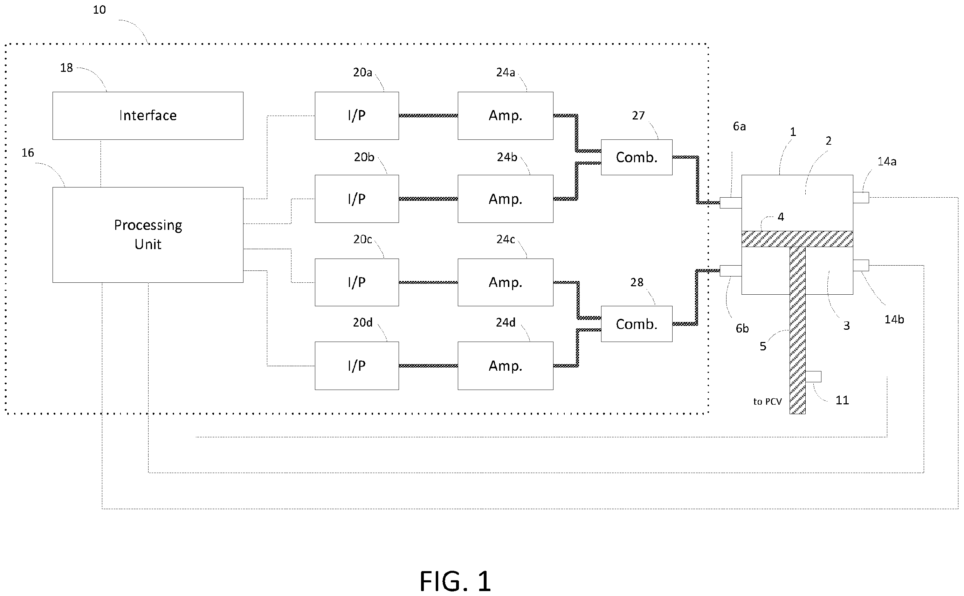

Fig. 1 illustrates an implementation of a system comprising a double-acting actuator 1 and a positioner 10 for controlling the actuator 1. The positioner 10 can comprise the advanced functionality of a digital valve controller (DVC), but Fig. 1 does not illustrate this functionality. The actuator 1 has an upper pneumatic chamber 2 and a lower pneumatic chamber 3, separated by a piston 4 which is attached to a stem 5 connected to a process control valve (PCV). The process control valve may control fluid flow within a process control system, such as a chemical or other process control plant. Chamber 2 has an outlet 6a which can supply air or another control fluid, or conversely exhaust the control fluid from chamber 2. Likewise, chamber 3 has an outlet 6b which can supply or exhaust the control fluid of chamber 3. As the amount of control fluid changes in one or both of the actuator chambers 2 and/or 3, the piston 4 and the attached stem 5 move to a new position.

An implementation of the double-acting actuator 1 can also contain a spring (not shown) in one of the chambers for fail-open or fail-closed action. The spring would place the actuator at one limit of the actuator's range when, for example, the chambers depressurize due to a leak. The spring can offset the balance between the two chamber pressures.

In some implementations, a mechanism in an alternative actuator can translate the linear motion of the pistons into rotary motion of the stems by means of rack and pinion, scotch yoke, or another mechanism. These implementations can contain more than one piston and more than two chambers.

Position sensor 11 is configured to detect the position of the actuator 1. While in the illustrated implementation this position indicates a linear displacement of the stem 5, in implementations with an alternative rotary actuator, an alternative sensor can be configured to measure angular displacement of some portion of the alternative rotary actuator. Pressure sensors 14a and 14b are configured to indicate the pressures in chambers 2 and 3, respectively. The pressure sensors can be located at the outlet ports 6a-b for the chambers. The sensors can also be integrated into the body of the positioner 10 at locations which are fluidly connected to the chambers 2 and 3 by pneumatic lines. Sensors 11, 14a and 14b communicatively couple to the processing unit 16.

The processing unit 16 is configured to detect outputs of position and pressure sensors 11, 14a and 14b. The processing unit 16 is communicatively coupled to the interface 18. In one implementation, the processing unit 16 can comprise a microprocessor. In other implementations, the processing unit 16 can comprise field programmable gate arrays (FPGAs) or analog circuits. The processing unit 16 is configured to output electrical control signals to the pneumatic devices. The processing unit 16 can also be configured to compute other signals, such as diagnostic information about the positioner and the actuator.

The interface 18 can include wired and wireless connections, circuitry for communications and signal processing, non-transient memory and a human-machine interface. Thus, the processing unit 16 can obtain set points and constraints for controlling the actuator in a variety of ways. The set point of position may be a dynamically changing value which is communicated by a process controller to the interface 18 using a predetermined communication protocol. The constraint on the stiffness of the actuator may or may not change dynamically. In implementations with preset constraints on the stiffness, the processing unit 16 may use the interface 18 to retrieve the stiffness constraint by accessing non-volatile memory where the constraint can be stored.

The implementation shown in Fig. 1 uses four current-to-pressure (I/P) transducers 20a-d to generate pneumatic signals for the actuator. The transducers 20a-d are communicatively coupled to the processing unit 16. Four transducers can be used in implementations in which each of the transducers is configured for activating flow in one direction. I/P transducer 20a and the corresponding pneumatic amplifier 24a are fluidly connected to the supply of pressurized control fluid, while 20b and the corresponding pneumatic amplifier 24b are fluidly connected to the exhaust at low pressure. The supply and exhaust pneumatic paths fluidly combine in the pneumatic summation component 27 and connect to the outlet 6a of the upper chamber 2. Analogously, I/P transducer 20c and the corresponding pneumatic amplifier 24c are fluidly connected to the supply of pressurized control fluid, while 20d and the corresponding pneumatic amplifier 24d are fluidly connected to the exhaust at low pressure. The supply and exhaust pneumatic paths fluidly combine in the pneumatic summation component 28 and connect to the outlet 6b of the lower chamber 3. In some implementations, a single pneumatic device can combine multiple pneumatic functions. For example, the same device can comprise pneumatic amplifiers 24a, 24b and the pneumatic summation component 27.

In operation, the processing unit 16 communicates to the interface 18 to obtain the set point of position as well as a constraint on the stiffness of the actuator 1. The processing unit 16 also reads the sensors 11, 14a and/or 14b to obtain the displacement of the actuator and/or the pressures in the chambers 2 and 3 of the actuator 1. For any given implementation, the processing unit 16 can compute a numerical indicator of the stiffness of an actuator from the collected sensor data in accordance to the way that the constraint on the numerical indicator of the stiffness of the actuator is defined. In one implementation, the constraint on the stiffness of the actuator can be defined as an acceptable range for the average of the pressures in the two chambers 2 and 3. In such implementation, the processing unit 16 computes the average of the two pressures measured by the pressure sensors 14a-b and compares it to the constraint. The processing unit 16 then computes two control signals and communicates the signals to activate two out of the four I/P transducers 20a-d.

Only one transducer needs to be activated for each pneumatic chamber at a given time in order to change the pressure in the chamber. Therefore, two control signals computed by the processing unit 16 are sufficient, as they can activate two of the four transducers 20a-d for each new control action. I/P transducers 20a and 20b activate, respectively, the supply and exhaust of the upper pneumatic chamber 2 of the actuator 1. I/P transducers 20c and 20d activate, respectively, the supply and exhaust of the lower pneumatic chamber 3 of the actuator 1. In one implementation, positive control signals can activate 20a and 20c, while negative control signals can activate 20b and 20d. The pneumatic amplifiers 24a-d amplify the flow rates of the transducers. The pneumatic summation components 27 and 28 connect the flow to the outlets of the pneumatic chambers 2 and 3. Active I/P transducer 20a results in control fluid flowing into chamber 2. Active I/P transducer 20b results in control fluid flowing out of chamber 2. Active I/P transducer 20c results in control fluid flowing into chamber 3. Active I/P transducer 20d results in control fluid flowing out of chamber 3. Another implementation may use only two I/P transducers if each is configured to control bi-directional flow.

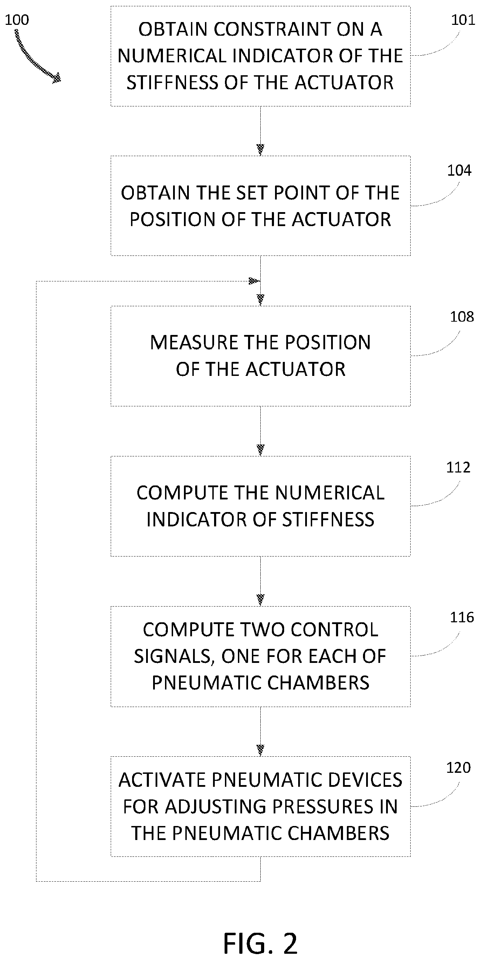

Fig. 2 illustrates an example method 100 for controlling the position of the double-acting actuator 1 in view of the stiffness constraint. The method 100 can be implemented as a set of software or firmware instructions and executed by the processing unit 16 within the system in Fig. 1 or other similar systems.

At block 101, the stiffness constraint is obtained. In one implementation, the stiffness constraint can be preset by the manufacturer of the positioner 10, while in another it can be preset by any operator with appropriate access privileges. Additionally, an operator or engineer can change the stiffness constraint in response to process requirements or changes detected in the process control equipment. The changes in the stiffness constraint can be communicated to the interface 18 by means of a predetermined communication protocol. The stiffness constraint may be specified in terms of a constraint on a numerical indicator of stiffness, the indicator calculated in a predetermined way depending on implementation. In one implementation, this indicator can be specified to reflect variations of actuator position, as measured by the position sensor 11. In another implementation, the indicator can be specified in terms of a combination, such as a weighted sum, of the pressures in the two chambers 2 and 3, measured by the pressure sensors 14a-b. Also, the position of the actuator can be combined with the pressures to arrive at an indicator of stiffness. In some implementations, the constraint on the indicator of stiffness may be dependent on available supply pressure.

At block 104, the processing unit 16 obtains the set point of the position. The set point can be the most recent value communicated to the interface 18 by a process controller or it can be a value stored by the interface in response to operator input. At block 108, the processing unit 16 reads the current value of the measured position from sensor 11. At block 112, the processing unit 16 computes the numerical indicator of stiffness. This computation corresponds to the way that the constraint on stiffness is specified. In one implementation, for example, the numerical indicator of stiffness can be calculated as an average of the pressures in the two chambers 2 and 3, and the constraint can be specified as an acceptable range of this average. In such implementation, block 112 comprises reading the pressures measured by sensors 14a and 14b, from which the average is computed. Another implementation may compute the numerical indicator of stiffness by adding the weighted pressures in the two chambers 2 and 3 in order to account for some asymmetry in the actuator. Such asymmetry could be due to the presence of springs in the actuator, or because of the difference in the area of the piston exposed to pressure in each chamber. For an implementation in which the numerical indicator of stiffness is computed by other means, only the sensors which measure the quantities involved in the computation need to be read, though other sensors may also be read. For example, the processing unit 16 can collect statistics on the variation of the position of the actuator in the absence of control signals in order to compute the numerical indicator of stiffness.

At block 116, the processing unit 16 computes the control signals. The processing unit 16 uses the computed control signals to activate the I/P transducers at block 120. In the illustrated implementation of Fig. 1, only two transducers need to be activated at a given time. One can compute two control signals that control whether the pressure in the upper chamber should be increased or decreased, whether the pressure in the lower chamber should be increased or decreased, and the rates at which these pressure changes should take place. For example, a negative control signal for the upper chamber 2 can indicate that the pressure in the upper chamber will be lowered and lead to the activation of the corresponding I/P transducer 20b. At the same time, the distinct control signal for the lower chamber 3 can take on either a positive or a negative value in order to, respectively, increase or decrease the pressure in the lower chamber. The positioner 10 may lower both pressures simultaneously in order to reduce the stiffness of the actuator. The relative rates of the pressure changes in the chambers would then set the direction of the change in the actuator position.

Control signals at block 116 can be calculated in a variety of different ways in different implementations. In a simple implementation, the pressures in both chambers 2 and 3 are reduced by a control action if the computed indicator of stiffness is too high with respect to the constraint, and, conversely, the pressures in both chambers are increased by a control action if the computed indicator of stiffness is too low with respect to the constraint. In such implementation, the change in position is set by the difference in the rates at which the two pressures are raised or lowered. In another implementation, the stiffness constraint obtained in 101 is a set point for the numerical indicator of stiffness, and the control signals are computed by a control algorithm which treats this set point as another input to the control loop, along with actuator position. Because there are two control signals as well as two input signals, this implementation employs Multiple Input Multiple Output (MIMO) control.

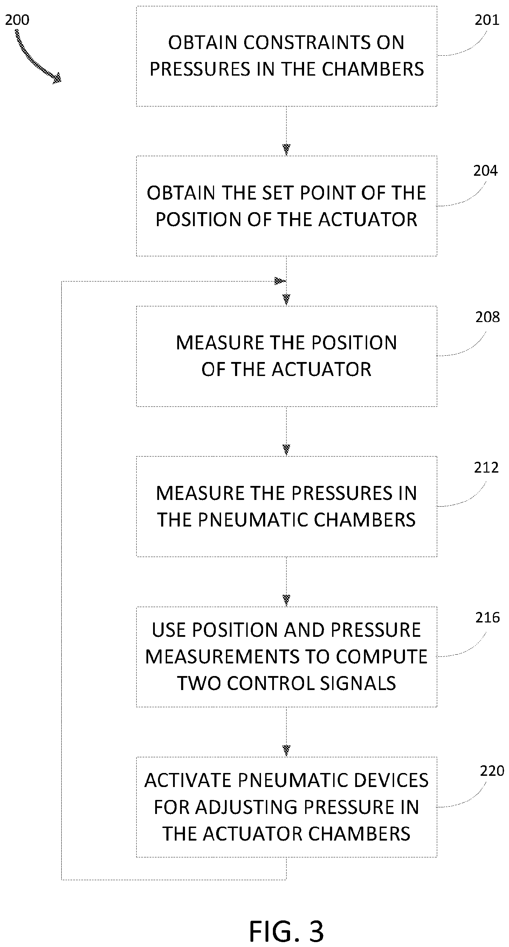

Fig. 3 illustrates an alternative method 200 for controlling the position of the double-acting actuator in which the measurements of pressures are used directly in the computation of control signals. At blocks 201 and 204, the processing unit 16 obtains the constraints on pressures and on the position of the actuator, respectively. In one possible implementation, the constraint on pressure may take form of a minimum pressure in one or both of the chambers 2 and/or 3. In another implementation, the constraint on pressure may comprise maximum pressure in one or both of the chambers. The constraint on pressure may comprise pressure set points in one or both of the chambers. If the set points in both chambers are given, the control algorithm can be allowed to settle to one of the two chamber set points, while treating the accompanying pressure of the other chamber for diagnostic purposes. Alternatively, the control algorithm can minimize the mean square error in the pressures of the two chambers. Also, the two pressures can be mathematically combined to create a single indicator, resulting in an approach analogous to computing the numerical indicator of stiffness.

The processing unit 16 obtains the measurements of the position of the actuator and the pressures in the chambers at blocks 208 and 212, respectively. At block 216, the processing unit 16 computes the control signals based on the position and pressure measurements, as well as the associated set points or constraints. In one example, if a pressure measurement in chamber 2 of Fig. 1 approaches a minimum value, the control signal would increase the pressure in chamber 2, while, possibly, increasing the pressure in chamber 3 even more, if the position set point is above the current position of the stem 5. At block 220, analogously to block 120, the control signals are translated into pneumatic control via the I/P actuators 20a-d.

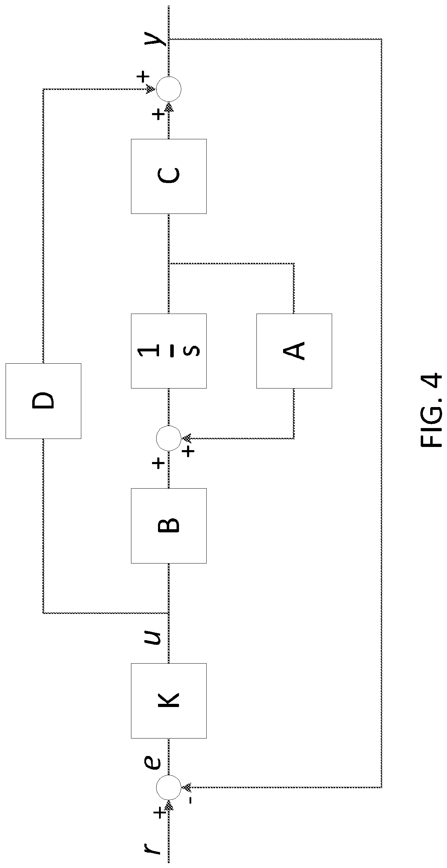

The control loop for implementing the MIMO implementation of the process in Fig. 2 can be represented in the state-space form illustrated in Fig. 4. The general form is also the same for the MIMO implementation of the process in Fig. 3, where pressure set points can be used in the control loop. In Fig. 4, the set point input signals are contained in an input vector r. The error vector e is computed by subtracting the output vector y from r. The error vector is then multiplied by the gain matrix K, to obtain the control signals in vector u. The integrating block $\frac{1}{s}$, the system matrix A, the input matrix B, the output matrix C and the feed-through matrix D describe the effect of the control signals $u$ on the output $y$. The reference vector $r$ and the output vector y need to comprise the same parameters of the system. These parameters include the actuator position, and, in the implementation in which the stiffness is simultaneously controlled, a numerical indicator of stiffness. The parameters can also include the velocity of the actuator, with the reference of the velocity usually set to zero.

The control signals are computed as weighted sums of the errors in position and the stiffness indicator, adding a factor for the velocity of the actuator, which can also be interpreted as the rate of change in the position error and can be computed using the difference in consecutive measurements of position. The resulting control signal can then be written as:

$$C_a = K_{p,a}e_x - K_{v,a}e_{\dot{x}} - K_{s,a}e_s$$

$$C_b = -K_{p,b}e_x + K_{v,b}e_{\dot{x}} - K_{s,b}e_s$$

where $C_a$ is the control signal for the upper chamber, $C_b$ is the control signal for the lower chamber, $K_{p,a}$ and $-K_{p,b}$ are the position feedback gains for chambers, $-K_{v,a}$, $K_{v,b}$ are the velocity feedback gains, $-K_{s,a}$, $-K_{s,b}$ are the feedback grains for the indicator of stiffness, $e_x$ is the error in the position, $e_x$ can be interpreted as rate of change of the error in position, or simply, as the velocity of the actuator and $e_s$ is the error in a numerical indicator of stiffness. In some implementations not included in the present invention, the numerical indicator of stiffness may be replaced by a pressure indicator, and $e_s$ is then replaced by the error in the pressure indicator, $e_p$.

In implementations not included in the present invention, the control signals $C_a$ and $C_b$ can be computed in a variety of ways different from the weighted sum of the errors. For example, the feedback gains can change values depending on the errors or other process parameters. Also, terms proportional to errors raised to integer or non-integer powers can be included in the computation of errors.

The effect of control signals $C_a$ and $C_b$ on the I/P transducers depends on a given implementation. In one implementation, analog I/P transducers can be used, and the control signals can set the magnitude of flow rates into or out of the corresponding chambers, with the flow rate magnitudes, for example, proportional to the control signals. In another implementation, especially suitable for digital I/P transducers, the duration of a fixed flow rate is controlled. For example, if $C_a$ is positive, while $C_b$ is negative, but its absolute value is twice that of $C_a$, then I/P transducers 20a and 20d in Fig. 1 are activated with 20d activated for twice the duration of 20a. The resulting increase in the amount of the control fluid in chamber 2 and the decrease in the control fluid in chamber 3 both contribute to the downward movement of the piston 4 and the stem 5. Additionally, if the decrease in the control fluid amount in chamber 3 is greater than the increase in chamber 2, the stiffness of the actuator can decrease.

The control of flow rate durations, as opposed to the flow rate magnitudes, is particularly applicable to the implementation of a control method in which the control actions are updated at pre-defined intervals. The fraction of the interval during which a given flow path is active can be proportional to the magnitude of the corresponding control signal, the magnitude determining the duration of an electrical pulse to the associated I/P transducer.

Additional Considerations

The foregoing detailed description has been given for clearness of understanding only, and no unnecessary limitations should be understood therefrom, as modifications will be obvious to those skilled in the art. Additionally, throughout this specification, plural instances may implement components, operations, or structures described as a single instance. Although individual operations of one or more methods are illustrated and described as separate operations, one or more of the individual operations may be performed concurrently or may be performed in an alternate order to the order illustrated. Structures and functionality presented as separate components in example configurations may be implemented as a combined structure or component. Similarly, structures and functionality presented as a single component may be implemented as separate components.

Throughout this specification, actions described as performed by the processing unit 16 or other similar devices (or routines or instructions executing thereon) generally refer to actions or processes of a processor manipulating or transforming data according to machine-readable instructions. The machine-readable instructions may be stored on and retrieved from a memory device communicatively coupled to the processor. That is, methods described herein may be embodied by a set of machine-executable instructions stored on a non-transitory computer readable medium (*i.e.,* on a memory device). The instructions, when executed by one or more processors of a corresponding device (*e.g.,* a server, a mobile device, etc.), cause the processors to execute the method. Where instructions, routines, modules, processes, services, programs, and/or applications are referred to herein as stored or saved on a computer readable memory or on a computer readable medium, the words "stored" and "saved" are intended to exclude transitory signals.

Unless specifically stated otherwise, discussions herein using words such as "processing," "computing," "calculating," "determining," "identifying," "presenting," "displaying," or the like may refer to actions or processes of a machine (*e.g.,* a computer) that manipulates or transforms data represented as physical (*e.g.,* electronic, magnetic, or optical) quantities within one or more memories (*e.g.,* volatile memory, non-volatile memory, or a combination thereof), registers, or other machine components that receive, store, transmit, or display information.

When implemented in software, any of the applications, services, and engines described herein may be stored in any tangible, non-transitory computer readable memory such as on a magnetic disk, a laser disk, solid state memory device, molecular memory storage device, or other storage medium, in a RAM or ROM of a computer or processor, etc. Although the example systems disclosed herein are disclosed as including, among other components, software and/or firmware executed on hardware, it should be noted that such systems are merely illustrative and should not be considered as limiting. For example, it is contemplated that any or all of these hardware, software, and firmware components could be embodied exclusively in hardware, exclusively in software, or in any combination of hardware and software. Accordingly, persons of ordinary skill in the art will readily appreciate that the examples provided are not the only way to implement such systems.

Thus, while the present invention has been described with reference to specific examples, which are intended to be illustrative only and not to be limiting of the invention, it will be apparent to those of ordinary skill in the art that changes, additions or deletions may be made to the disclosed embodiments without departing from the scope of the invention as defined in the appended claims.

**Claims**

1. A method of controlling a double-acting pneumatic actuator (1), the actuator (1) comprising an actuated piston (4) and two pneumatic chambers (2, 3), wherein pressure in one chamber (2, 3) exerts a force on the piston (4) in one direction, while pressure in the other chamber (2, 3) exerts a force on the piston (4) in the opposite direction, and the method of controlling the actuator (1) comprising:

   obtaining a constraint on a numerical indicator of the stiffness of the actuator (1) and obtaining a set point for a position of the actuator (1);
   measuring the position of the actuator (1);
   computing the numerical indicator of the stiffness of the actuator (1);
   computing two control signals to adjust the pressures in the two pneumatic chambers (2, 3) in view of the constraint, including computing, for each of the two control signals, a weighted sum of (i) an error in the position of the actuator, (ii) a velocity of the actuator, and (iii) an error in the numerical indicator of the stiffness of the actuator, in view of the constraint, to simultaneously minimize the error in the position of the actuator and the error in the numerical indicator of the stiffness of the actuator; and
   activating pneumatic devices to adjust the pressures in the pneumatic chambers (2, 3) of the actuator (1) in response to the two control signals.

2. The method of claim 1, further comprising:

   measuring the pressures in each of the pneumatic chambers (2, 3) of the actuator (1); and using the measured pressures in computing the numerical indicator of the stiffness of the actuator (1).

3. The method of any preceding claim, comprising computing the numerical indicator of the stiffness of the actuator (1) using a weighted sum of the pressures in the two pneumatic chambers (2, 3).

4. The method of any preceding claim, comprising computing the numerical indicator of the stiffness of the actuator (1) by averaging the pressures in the two pneumatic chambers (2, 3).

5. The method of any preceding claim, wherein activating the pneumatic devices to adjust the pressures in the pneumatic chambers (2, 3) of the actuator (1) in response to the two control signals comprises activating each of the pneumatic devices to provide a constant flow rate for a duration consistent with the magnitude of the corresponding control signal.

6. A system for controlling a double-acting pneumatic actuator (1), the system comprising:

   an interface (18) configured to obtain a set point for a position of the actuator (1) and to obtain a constraint on a numerical indicator of the stiffness of the actuator (1);
   a position sensor (11) configured to measure the position of the actuator (1);
   two pressure sensors (14a, 14b) configured to measure pressures in each of two pneumatic chambers (2, 3) of the actuator (1), comprising a first sensor (14a) configured to measure a value indicative of pressure in the first chamber (2) and a second sensor (14b) configured to measure a value indicative of pressure in the second chamber (3);
   an electronic processing unit (16) configured to compute the numerical indicator of the stiffness of the actuator (1) using the measured values indicative of the pressures in the two pneumatic chambers (2, 3) and to compute two electrical control signals to adjust the pressures in the two pneumatic chambers (2, 3) in view of the constraint including computing, for each of the two electrical control signals, a weighted sum of (i) an error in the position of the actuator, (ii) a velocity of the actuator, and (iii) an error in the numerical indicator of the stiffness of the actuator, in view of the constraint, to simultaneously minimize the error in the position of the actuator and the error in the numerical indicator of the stiffness of the actuator; and
   transducers (20a, 20b, 20c, 20d) to convert the two electrical control signals to two pneumatic control signals configured to adjust the pressures in the two pneumatic chambers (2, 3) of the actuator (1) according to the two pneumatic control signals.

7. The system of claim 6, wherein the interface (18) for obtaining the constraint on the numerical indicator of the stiffness of the actuator (1) comprises a means of selecting stored values for the constraint on the numerical indicator of the stiffness of the actuator (1).

**Patentansprüche**

1. Verfahren zum Steuern eines doppeltwirkenden Pneumatikaktors (1), wobei der Aktor (1) einen betätigten Kolben (4) und zwei Pneumatikkammern (2, 3) umfasst, ein Druck in einer Kammer (2, 3) eine Kraft auf den Kolben (4) in einer Richtung ausübt, während ein Druck in der weiteren Kammer (2, 3) eine Kraft auf den Kolben (4) in der entgegengesetzten Richtung ausübt, und das Verfahren zum Steuern des Aktors (1) Folgendes umfasst:

   Erhalten einer Abhängigkeit von einem numerischen Indikator der Steifigkeit des Aktors (1) und Erhalten eines Sollwerts für eine Stellung des Aktors (1);
   Messen der Stellung des Aktors (1);
   Berechnen des numerischen Indikators der Steifigkeit des Aktors (1);
   Berechnen von zwei Steuersignalen, um die Drücke in den zwei Pneumatikkammern (2, 3) im Hinblick auf die Abhängigkeit einzustellen, was enthält, für jedes der zwei Steuersignale, eine gewichtete Summe (i) eines Fehlers der Stellung des Aktors, (ii) einer Geschwindigkeit des Aktors und (iii) eines Fehlers des numerischen Indikators der Steifigkeit des Aktors im Hinblick auf die Abhängigkeit zu berechnen, um den Fehler der Stellung des Aktors und den Fehler des numerischen Indikators der Steifigkeit des Aktors gleichzeitig zu minimieren; und
   Aktivieren von Pneumatikvorrichtungen, um die Drücke in den Pneumatikkammern (2, 3) des Aktors (1) in Reaktion auf die zwei Steuersignale einzustellen.

2. Verfahren nach Anspruch 1, das ferner Folgendes umfasst:

Messen der Drücke in jeder der Pneumatikkammern (2, 3) des Aktors (1) und

Verwenden der gemessenen Drücke beim Berechnen des numerischen Indikators der Steifigkeit des Aktors (1).

3. Verfahren nach einem vorhergehenden Anspruch, das ein Berechnen des numerischen Indikators der Steifigkeit des Aktors (1) unter Verwendung einer gewichteten Summe der Drücke in den zwei Pneumatikkammern (2, 3) umfasst.

4. Verfahren nach einem vorhergehenden Anspruch, das ein Berechnen des numerischen Indikators der Steifigkeit des Aktors (1) durch Mitteln der Drücke in den zwei Pneumatikkammern (2, 3) umfasst.

5. Verfahren nach einem vorhergehenden Anspruch, wobei das Aktivieren der Pneumatikvorrichtungen, um die Drücke in den Pneumatikkammern (2, 3) des Aktors (1) in Reaktion auf die zwei Steuersignale einzustellen, ein Aktivieren jeder der Pneumatikvorrichtungen umfasst, um eine konstante Durchflussmenge für eine Dauer bereitzustellen, die mit der Magnitude des entsprechenden Steuersignals konsistent ist.

6. System zum Steuern eines doppeltwirkenden Pneumatikaktors (1), wobei das System Folgendes umfasst:

eine Schnittstelle (18), die konfiguriert ist, einen Sollwert für eine Stellung des Aktors (1) zu erhalten und eine Abhängigkeit von einem numerischen Indikator der Steifigkeit des Aktors (1) zu erhalten;
einen Stellungssensor (11), der konfiguriert ist, die Stellung des Aktors (1) zu messen;
zwei Drucksensoren (14a, 14b), die konfiguriert sind, Drücke in jeder von zwei Pneumatikkammern (2, 3) des Aktors (1) zu messen, und einen ersten Sensor (14a), der konfiguriert ist, einen Wert zu messen, der einen Druck in der ersten Kammer (2) angibt, und einen zweiten Sensor (14b), der konfiguriert ist, einen Wert zu messen, der einen Druck in der zweiten Kammer (3) angibt, umfassen;
eine elektronische Verarbeitungseinheit (16), die konfiguriert ist, den numerischen Indikator der Steifigkeit des Aktors (1) unter Verwendung der gemessenen Werte, die die Drücke in den zwei Pneumatikkammern (2, 3) angeben, zu berechnen und zwei elektrische Steuersignale zu berechnen, um die Drücke in den zwei Pneumatikkammern (2, 3) im Hinblick auf die Abhängigkeit einzustellen, was ein Berechnen für jedes der zwei elektrischen Steuersignale einer gewichteten Summe (i) eines Fehlers der Stellung des Aktors, (ii) einer Geschwindigkeit des Aktors und (iii) eines Fehlers des numerischen Indikators der Steifigkeit des Aktors im Hinblick auf die Abhängigkeit umfasst, um den Fehler der Stellung des Aktors und den Fehler des numerischen Indikators der Steifigkeit des Aktors gleichzeitig zu minimieren; und
Wandler (20a, 20b, 20c, 20d), um die zwei elektrischen Steuersignale zu zwei Pneumatiksteuersignalen umzuwandeln, die konfiguriert sind, die Drücke in den zwei Pneumatikkammern (2, 3) des Aktors (1) gemäß den zwei Pneumatiksteuersignalen einzustellen.

7. System nach Anspruch 6, wobei die Schnittstelle (18) zum Erhalten der Abhängigkeit vom numerischen Indikator der Steifigkeit des Aktors (1) ein Mittel zum Wählen gespeicherter Werte für die Abhängigkeit vom numerischen Indikator der Steifigkeit des Aktors (1) umfasst.

**Revendications**

1. Procédé de commande d'un actionneur pneumatique à double action (1), l'actionneur (1) comprenant un piston actionné (4) et deux chambres pneumatiques (2, 3), dans lequel la pression dans une chambre (2, 3) exerce une force sur le piston (4) dans une direction, tandis que la pression dans l'autre chambre (2, 3) exerce une force sur le piston (4) dans la direction opposée, et le procédé de commande de l'actionneur (1) comprenant :

l'obtention d'une contrainte sur un indicateur numérique de la raideur de l'actionneur (1) et l'obtention d'un point de consigne pour une position de l'actionneur (1) ;
la mesure de la position de l'actionneur (1) ;
le calcul de l'indicateur numérique de la raideur de l'actionneur (1) ;
le calcul de deux signaux de commande pour ajuster les pressions dans les deux chambres pneumatiques (2, 3) compte tenu de la contrainte, comportant le calcul, pour chacun des deux signaux de commande, d'une somme pondérée de (i) une erreur dans la position de l'actionneur, (ii) une vitesse de l'actionneur, et (iii) une erreur dans l'indicateur numérique de la raideur de l'actionneur, compte tenu de la contrainte, pour minimiser simultanément l'erreur dans la position de l'actionneur et l'erreur dans l'indicateur numérique de la raideur de l'actionneur ; et
l'activation de dispositifs pneumatiques pour ajuster les pressions dans les chambres pneumatiques (2, 3) de l'actionneur (1) en réponse aux deux signaux de commande.

**2.** Procédé selon la revendication 1, comprenant en outre :

la mesure des pressions dans chacune des chambres pneumatiques (2, 3) de l'actionneur (1) ; et
l'utilisation des pressions mesurées pour calculer l'indicateur numérique de la raideur de l'actionneur (1).

**3.** Procédé selon l'une quelconque des revendications précédentes, comprenant le calcul de l'indicateur numérique de la raideur de l'actionneur (1) en utilisant une somme pondérée des pressions dans les deux chambres pneumatiques (2, 3).

**4.** Procédé selon l'une quelconque des revendications précédentes, comprenant le calcul de l'indicateur numérique de la raideur de l'actionneur (1) en établissant la moyenne des pressions dans les deux chambres pneumatiques (2, 3).

**5.** Procédé selon l'une quelconque des revendications précédentes, dans lequel l'activation des dispositifs pneumatiques pour ajuster les pressions dans les chambres pneumatiques (2, 3) de l'actionneur (1) en réponse aux deux signaux de commande comprend l'activation de chacun des dispositifs pneumatiques pour fournir un débit constant pendant une durée compatible avec la grandeur du signal de commande correspondant.

**6.** Système de commande d'un actionneur pneumatique à double action (1), le système comprenant :

une interface (18) configurée pour obtenir un point de consigne pour une position de l'actionneur (1) et pour obtenir une contrainte sur un indicateur numérique de la raideur de l'actionneur (1) ;
un capteur de position (11) configuré pour mesurer la position de l'actionneur (1) ;
deux capteurs de pression (14a, 14b) configurés pour mesurer des pressions dans chacune de deux chambres pneumatiques (2, 3) de l'actionneur (1), comprenant un premier capteur (14a) configuré pour mesurer une valeur indicative de pression dans la première chambre (2) et un second capteur (14b) configuré pour mesurer une valeur indicative de pression dans la seconde chambre (3) ;
une unité de traitement électronique (16) configurée pour calculer l'indicateur numérique de la raideur de l'actionneur (1) à l'aide des valeurs mesurées indicatives des pressions dans les deux chambres pneumatiques (2, 3) et pour calculer deux signaux de commande électrique pour ajuster les pressions dans les deux chambres pneumatiques (2, 3) compte tenu de la contrainte comportant le calcul, pour chacun des deux signaux de commande électrique, d'une somme pondérée de (i) une erreur dans la position de l'actionneur, (ii) une vitesse de l'actionneur, et (iii) une erreur dans l'indicateur numérique de la raideur de l'actionneur, compte tenu de la contrainte, pour minimiser simultanément l'erreur dans la position de l'actionneur et l'erreur dans l'indicateur numérique de la raideur de l'actionneur ; et
des transducteurs (20a, 20b, 20c, 20d) pour convertir les deux signaux de commande électrique en deux signaux de commande pneumatique configurés pour ajuster les pressions dans les deux chambres pneumatiques (2, 3) de l'actionneur (1) en fonction des deux signaux de commande pneumatique.

**7.** Système selon la revendication 6, dans lequel l'interface (18) pour obtenir la contrainte sur l'indicateur numérique de la raideur de l'actionneur (1) comprend des moyens de sélection de valeurs mémorisées pour la contrainte sur l'indicateur numérique de la raideur de l'actionneur (1).

FIG. 1

100

| OBTAIN CONSTRAINT ON A NUMERICAL INDICATOR OF THE STIFFNESS OF THE ACTUATOR | 101 |

| OBTAIN THE SET POINT OF THE POSITION OF THE ACTUATOR | 104 |

| MEASURE THE POSITION OF THE ACTUATOR | 108 |

| COMPUTE THE NUMERICAL INDICATOR OF STIFFNESS | 112 |

| COMPUTE TWO CONTROL SIGNALS, ONE FOR EACH OF PNEUMATIC CHAMBERS | 116 |

| ACTIVATE PNEUMATIC DEVICES FOR ADJUSTING PRESSURES IN THE PNEUMATIC CHAMBERS | 120 |

FIG. 2

200

┌─────────────────────────────┐
│  OBTAIN CONSTRAINTS ON      │  201
│  PRESSURES IN THE CHAMBERS  │
└─────────────────────────────┘

┌─────────────────────────────┐
│  OBTAIN THE SET POINT OF THE│  204
│  POSITION OF THE ACTUATOR   │
└─────────────────────────────┘

┌─────────────────────────────┐
│  MEASURE THE POSITION       │  208
│  OF THE ACTUATOR            │
└─────────────────────────────┘

┌─────────────────────────────┐
│  MEASURE THE PRESSURES IN   │  212
│  THE PNEUMATIC CHAMBERS     │
└─────────────────────────────┘

┌─────────────────────────────┐
│  USE POSITION AND PRESSURE  │  216
│  MEASUREMENTS TO COMPUTE    │
│  TWO CONTROL SIGNALS        │
└─────────────────────────────┘

┌─────────────────────────────┐
│  ACTIVATE PNEUMATIC DEVICES │  220
│  FOR ADJUSTING PRESSURE IN  │
│  THE ACTUATOR CHAMBERS      │
└─────────────────────────────┘

FIG. 3

FIG. 4

**REFERENCES CITED IN THE DESCRIPTION**

**Non-patent literature cited in the description**

- **XIANGRONG SHEN.** Simultaneous Force and Stiffness Control of a Pneumatic Actuator. *Journal of Dynamic Systems, Measurement and Control,* 01 January 2007, vol. 129 (4), 425-434